(19) Europäisches Patentamt
European Patent Office
Office européen des brevets

(11) **EP 2 620 829 A1**

(12) **EUROPEAN PATENT APPLICATION**

(43) Date of publication:
**31.07.2013 Bulletin 2013/31**

(51) Int Cl.:
***G05F 1/67*** *(2006.01)*

(21) Application number: **12152566.1**

(22) Date of filing: **26.01.2012**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(71) Applicants:<br>• **Mitsubishi Electric R&D Centre Europe B.V.**<br>  **1119 NS  Schiphol Rijk (NL)**<br>  Designated Contracting States:<br>  **FR**<br>• **Mitsubishi Electric Corporation**<br>  **Chiyoda-ku**<br>  **Tokyo 100-8310 (JP)**<br>  Designated Contracting States:<br>  **AL AT BE BG CH CY CZ DE DK EE ES FI GB GR HR HU IE IS IT LI LT LU LV MC MK MT NL NO PL PT RO RS SE SI SK SM TR** | (72) Inventors:<br>• **Chapalain, Nadine**<br>  **35708 RENNES Cedex 7 (FR)**<br>• **Voyer, Nicolas**<br>  **35708 RENNES Cedex 7 (FR)**<br><br>(74) Representative: **Maillet, Alain**<br>**Cabinet Le Guen Maillet**<br>**5, place Newquay**<br>**B.P. 70250**<br>**35802 Dinard Cedex (FR)** |

(54) **Device for tracking a maximum power point of a power source like a photovoltaic cell**

(57)    The present invention concerns a device for tracking the maximum power point of a power source, the device comprising:
- means for controlling the voltage provided by the power source to a first voltage value at a first time instant and for measuring a first electric power value,
- means for controlling the voltage provided by the power source at a second time instant to a second voltage value different from the first voltage value and for measuring a second electric power value,
- means for controlling the voltage provided by the power source at a third time instant to the first voltage value and for measuring a third electric power value,
- means for determining a fourth power value from the first and the third power value,
- means for modifying the first and second voltage values according to the comparison of the second and fourth power values.

Fig. 5

## Description

The present invention relates generally to a device for tracking a maximum power point of a power source like a photovoltaic cell or an array of cells or a fuel cell.

A photovoltaic cell directly converts solar energy into electrical energy. The electrical energy produced by the photovoltaic cell can be extracted over time and used in the form of electric power. The direct electric power provided by the photovoltaic cell is provided to energy conversion devices like DC-DC up/down converter circuits and/or DC/AC inverter circuits.

However, the current-voltage characteristics of photovoltaic cells cause the output power to change nonlinearly with the current drawn from photovoltaic cells. The power-voltage curve changes according to climatic variations like light radiation levels and operation temperatures.

The near optimal point at which to operate photovoltaic cells or arrays of cells is at or near the region of the current-voltage curve where the power is greatest. This point is denominated as the Maximum Power Point (MPP).

The location of the Maximum Power Point is not known, but can be located, either through calculation models or by search algorithms.

Therefore Maximum Power Point Tracking techniques are needed to maintain the photovoltaic cells or arrays of cells operating point at its Maximum Power Point.

As the power-voltage curve changes according to climatic variations, the Maximum Power Point also changes according to climatic variations.

It is then necessary to be able to identify the Maximum Power Point at any time.

The present invention aims at providing a device which enables to provide a tracking of the MPP which is robust to climatic variations and with a limited increase of the duration of the perturbation cycle.

To that end, the present invention concerns a device for tracking the maximum power point of a power source, the device comprising:

- means for controlling the voltage provided by the power source to a first voltage value at a first time instant,
- means for measuring a first electric power value generated by the power source at the first time instant,
- means for controlling the voltage provided by the power source at a second time instant to a second voltage value different from the first voltage value,
- means for measuring a second electric power value generated by the power source at the second time instant,
- means for controlling the voltage provided by the power source at a third time instant to the first voltage value,

- means for measuring a third electric power value generated by the power source at the third time instant,
- means for determining a fourth power value from the first and the third power value,
- means for modifying the first and second voltage values according to the comparison of the second and fourth power values.

The present invention concerns also a method for tracking the maximum power point of a power source, the method comprising the steps of:

- controlling the voltage provided by the power source to a first voltage value at a first time instant,
- measuring a first electric power value generated by the power source at the first time instant,
- controlling the voltage provided by the power source at a second time instant to a second voltage value different from the first voltage value,
- measuring a second electric power value generated by the power source at the second time instant,
- controlling the voltage provided by the power source at a third time instant to the first voltage value,
- measuring a third electric power value generated by the power source at the third time instant,
- determining a fourth power value from the first and the third power value,
- modifying the first and second voltage values according to the comparison of the second and fourth power values.

Thus, the fourth power value can reflect the power that would have been delivered by the power source at the first voltage value at the second time instant. By comparing the fourth power value with the second power value delivered by the voltage source at the second voltage value at second time instant, it is possible to determine in which direction the voltage provided by the power has to be modified in order to get the maximum power from the power source with good robustness against very fast variations of irradiance.

The tracking of the maximum power point is then robust to climatic variations.

According to a particular feature, the device further comprises means for setting the second voltage value upper than or lower than the first voltage value according to the comparison of the second and fourth power values.

Thus, as the second voltage value is applied less frequently than the first voltage value, power losses can be minimised if the first voltage value is set closer to the estimation of the maximum power point.

According to a particular feature, the second voltage value is changed from being lower than the first voltage value to being upper than the first voltage value or the second voltage value is changed from being upper than the first voltage value to being lower than the first voltage value if the difference between the second power value and the fourth power value is positive.

Thus, as the difference between second and fourth power values together with the first and the second voltage levels indicates the direction of maximum power point, the first voltage value can be set closer to the maximum power point than the second voltage value. As the second voltage value is applied less frequently than the first voltage value, power losses can be minimised.

According to a particular feature, the second voltage value is changed from being lower than the first voltage value to being upper than the first voltage or the second voltage value is changed from being upper than the first voltage value to being lower than the first voltage value if the difference between the second power value and the fourth power value is negative.

Thus, when maximum power point is located between first and second voltage values, which typically occurs once the algorithm has converged, the first voltage value can be set closer to the maximum power point than the second voltage value. As the second voltage value is applied less frequently than the first voltage value, power losses can be minimised.

According to a particular feature, the difference between the second and first time instants is equal to the difference between the third and second time instants and the fourth power value is the average of the first and third power values.

Thus, the fourth power value can be easily computed to reflect the power that would have been delivered by the power source at the first voltage value at the second time instant. Fourth and second power values can then be compared to determine the direction of maximum power point at second time instant, regardless of climatic variations.

According to a particular feature, the means for modifying first and second voltage values further comprise:

- means for determining a voltage step from the comparison of the second and fourth power values,
- means for modifying the first and second voltage values by adding or subtracting the voltage step to the first and second voltage values according to the difference between the second and fourth power values and to the difference of the first and second voltage values.

Thus, first and second voltage values applied to the power source can be jointly steered to maximise the power delivered by the power source.

According to a particular feature, the voltage step is the difference between the second and first voltage values.

Thus, voltage excursion around maximum power point is minimised under static conditions. The power losses resulting from voltage excursion are minimised.

According to a particular feature, the voltage step is proportional to the difference between second and fourth power values.

Thus, when the difference between second and fourth power values is high, first and second voltage can be estimated to be far away from the maximum power point. A high voltage step can be set to move quicker the first and second voltage values towards maximum power point.

According to a particular feature, the electric power values are measured on voltages and currents at the output of the power source.

Thus, the energy conversion device can maximise the power delivered by the power source.

According to a particular feature, the device for tracking the maximum power point is included in an energy conversion device.

Thus, the energy conversion device can maximise the power delivered to the load connected to the conversion device.

The characteristics of the invention will emerge more clearly from a reading of the following description of an example embodiment, the said description being produced with reference to the accompanying drawings, among which :

Fig. 1 is an example of a curve representing the output current variations of a power source according to the output voltage of the power source;
Fig. 2 is an example of an energy conversion system wherein the present invention may be implemented;
Fig. 3 is an example of an algorithm for tracking the maximum power point of the power source according to a first mode of realization of the present invention ;
Fig. 4 shows plural curves representing the power variations versus voltage of the photovoltaic cells or arrays of cells at different climatic conditions and power measurement points taken according to the first mode of realization of the present invention;
Fig. 5 is an example of an algorithm for tracking the maximum power point of the power source according to a second mode of realization of the present invention ;
Fig. 6 shows plural curves representing the power variations versus voltage of the photovoltaic cells or arrays of cells at different climatic conditions and power measurement points taken according to the second mode of realization of the present invention;
Fig. 7 is an example of an algorithm for tracking the maximum power point of the power source according to a third mode of realization of the present invention.

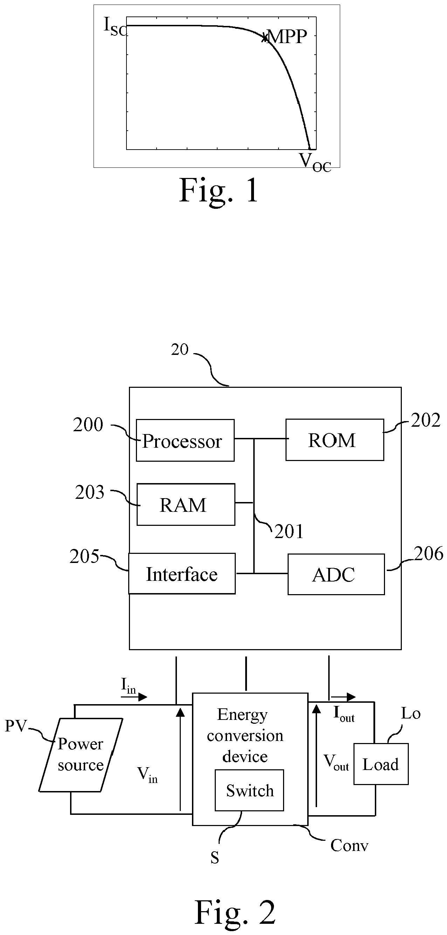

**Fig. 1** is an example of a curve representing the output current variations of a power source according to the output voltage of the power source.

On the horizontal axis of Fig. 1, voltage values are shown. The voltage values are comprised between null value and the open circuit voltage $V_{OC}$.

On the vertical axis of Fig. 1, current values are shown. The current values are comprised between null value and the short circuit current $I_{SC}$.

For example, if the power source PV is a photovoltaic array, at any given light level and photovoltaic array temperature, there is an infinite number of current-voltage pairs, or operating points, at which the photovoltaic array can operate. However, there exists a single maximum power point for a given light level and photovoltaic array temperature.

**Fig. 2** is an example of an energy conversion system wherein the present invention may be implemented.

The energy conversion system is composed of a power source PV like a photovoltaic cell or an array of cells or a fuel cell connected to an energy conversion device Conv like a DC-DC step-down/step-up converter and/or a DC/AC converter also named inverter, which output provides electrical energy to the load Lo.

The energy conversion device Conv comprises at least one switch S.

The power source PV provides current intended to the load Lo. The current $I_{in}$ and the voltage $V_{in}$ provided by the power source PV are converted by the energy conversion device Conv in output current $I_{out}$ and output voltage $V_{out}$ prior to be used by the load Lo.

According to the invention, the energy conversion system further comprises a controller device 20.

The controller device 20 determines, from successive power measurements, a regulation voltage value. The regulation voltage value is an estimation of the input voltage value which maximizes the energy produced by the power source PV.

It has to be noted here that successive power measurements used by the controller device 20 can be realised at the input or at the output of the energy conversion device Conv.

The controller device 20 controls the input voltage of the energy conversion device Conv, by controlling a duty cycle according to the regulation voltage value $V_{pvref}$.

The duty cycle drives the ON/OFF state of the at least one switch S of the energy conversion device Conv.

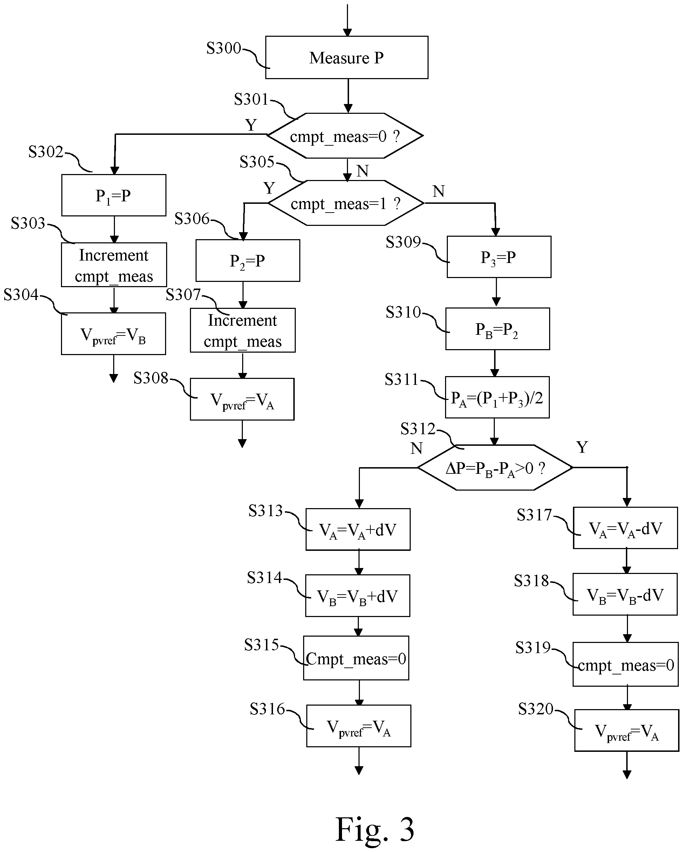

The controller device 20 has, for example, an architecture based on components connected together by a bus 201 and a processor 200 controlled by the program related to the algorithm as disclosed in the Fig. 3, 5 or 7.

It has to be noted here that the processor 200 is, in a variant, implemented under the form of one or several dedicated integrated circuits which execute the same operations as the one executed by the processor 200 as disclosed hereinafter.

The bus 201 links the processor 200 to a read only memory ROM 202, a random access memory RAM 203, an analogue to digital converter ADC 206 and to an interface 205.

The read only memory ROM 202 contains instructions of the program related to the algorithm as disclosed in the Fig. 3, 5 or 7 which are transferred, when the controller device 20 is powered on to the random access memory RAM 203.

The RAM memory 203 contains registers intended to receive variables, and the instructions of the program related to the algorithm as disclosed in the Fig. 3, 5 or 7.

The analogue to digital converter 206 is connected to the input and the output of the energy conversion device Conv and converts voltages and currents at the input and the output of the energy conversion device Conv into binary information.

The processor 200, transfers, through interface module 205, the duty cycle D to be applied by the energy conversion device Conv.

According to the invention, the controller device 20 comprises:

- means for controlling the voltage provided by the power source to a first voltage value at a first time instant,
- means for measuring a first electric power value generated by the power source at the first time instant,
- means for controlling the voltage provided by the power source at a second time instant to a second voltage value different from the first voltage value,
- means for measuring a second electric power value generated by the power source at the second time instant,
- means for controlling the voltage provided by the power source at a third time instant to the first voltage value,
- means for measuring a third electric power value generated by the power source at the third time instant,
- means for determining a fourth power value from the first and the third power value,
- means for modifying the first and second voltage values according to the comparison of the second and fourth power values.

**Fig.** 3 is an example of an algorithm for tracking the maximum power point of the power source according to a first mode of realization of the present invention.

More precisely, the processor 200 executes the present algorithm periodically by step of a predetermined time period, for example every second.

At first execution of present algorithm, the processor 200 reads in memory 203 a predetermined value $\Delta V_{AB}$ and determines initial values of variables $V_A$ and $V_B$ from the predetermined value, for example, $\Delta V_{AB}$ is equal to one volt.

In a first variant, initial value of $V_B$ is equal to the null value and initial value of $V_A$ is equal to the predetermined value $\Delta V_{AB}$.

In a second variant, the processor 200 commands the energy conversion device Conv in order to measure the open circuit voltage $V_{OC}$, the initial value of $V_A$ is equal to the value of Voc and the initial value of $V_B$ is equal to the difference between $V_A$ and the predetermined value $\Delta V_{AB}$.

The processor 200 then controls the voltage provided by the power source PV to a first value $V_{pvref}$ which is equal to a value $V_A$.

At step S300, the processor 200 commands the analogue to digital converter ADC 206 in order to proceed to a measurement of the voltage $V_{in}$ and the current $I_{in}$.

From the voltage $V_{in}$ and the current $I_{in}$ values, the processor 200 determines a power value P provided by the power source PV.

At next step S301, the processor 200 checks if the variable cmpt_meas is equal to null value.

If the variable cmpt_meas is equal to null value, the processor 200 moves to step S302. Otherwise, the processor 200 moves to step S305.

At step S302, the processor 200 sets the variable $P_1$ to the value of P determined at step S300.

At next step S303, the processor 200 increments the value of variable cmpt_meas by one.

At next step S304, the processor 200 controls the voltage provided by the power source PV to a second value $V_{pvref}$ which is equal to a value $V_B$. The voltage value $V_B$ is memorized in the RAM memory 203. The processor 200 transfers, through interface module 205, the duty cycle D to be applied by the energy conversion device Conv in order to obtain $V_{in} = V_{pvref}$.

After that, the processor 200 interrupts the present algorithm and returns to step S300.

At step S305, the processor 200 checks if the variable cmpt_meas is equal to the value one.

If the variable cmpt_meas is equal to the value one, the processor 200 moves to step S306. Otherwise, the processor 200 moves to step S309.

At step S306, the processor 200 sets the variable $P_2$ to the value of P measured at step S300.

At next step S307, the processor 200 increments the value of variable cmpt_meas by one.

At next step S308, the processor 200 controls the voltage provided by the power source PV to a third value $V_{pvref}$ which is equal to a value $V_A$. The voltage value $V_A$ is memorized in the RAM memory 203. The processor 200 transfers, through the interface module 205, the duty cycle D to be applied by the energy conversion device Conv in order to obtain $V_{in} = V_{pvref}$.

After that, the processor 200 interrupts the present algorithm and returns to step S300.

At step S309, the processor 200 sets the variable $P_3$ to the value of P measured at step S300.

At next step S310, the processor 200 sets the variable $P_B$ to the value of $P_2$.

At next step S311, the processor 200 determines a mean value $P_A$ of $P_3$ and $P_1$.

$P_A = (P_1 + P_3)/2$

At next step S312, the processor 200 checks if the difference $\Delta P = P_B - P_A$ is positive.

If the difference $\Delta P = P_B - P_A$ is negative, the processor 200 moves to step S313. Otherwise, the processor 200 moves to step S317.

At step S313, the processor 200 sets the variable $V_A$ to $V_A$ +dV.

At step S314, the processor 200 sets the variable $V_B$ to $V_B$ +dV.

For example dV is equal to one volt.

For example dV is proportional to the difference between the second and fourth power values.

At next step S315, the processor 200 sets the value of variable cmpt_meas to null value.

At next step S316, the processor 200 controls the voltage provided by the power source PV to a third value $V_{pvref}$ which is equal to a value $V_A$. The voltage value $V_A$ is memorized in the RAM memory 203. The processor 200 transfers, through interface module 205, the duty cycle D to be applied by the energy conversion device Conv in order to obtain $V_{in} = V_{pvref}$.

After that, the processor 200 interrupts the present algorithm and waits for the predetermined time period before returning to step S300.

At step S317, the processor 200 sets the variable $V_A$ to $V_A$ -dV.

At step S318, the processor 200 sets the variable $V_B$ to $V_B$ -dV.

For example dV is equal to one volt.

For example dV is proportional to the difference between the second and fourth power values.

At next step S319, the processor 200 sets the value of variable cmpt_meas to null value.

At next step S320, the processor 200 controls the voltage provided by the power source PV to a third value $V_{pvref}$ which is equal to a value $V_A$. The voltage value $V_A$ is memorized in the RAM memory 203. The processor 200 transfers, through interface module 205, the duty cycle D to be applied by the energy conversion device Conv in order to obtain $V_{in} = V_{pvref}$.

After that, the processor 200 interrupts the present algorithm and returns to step S300.

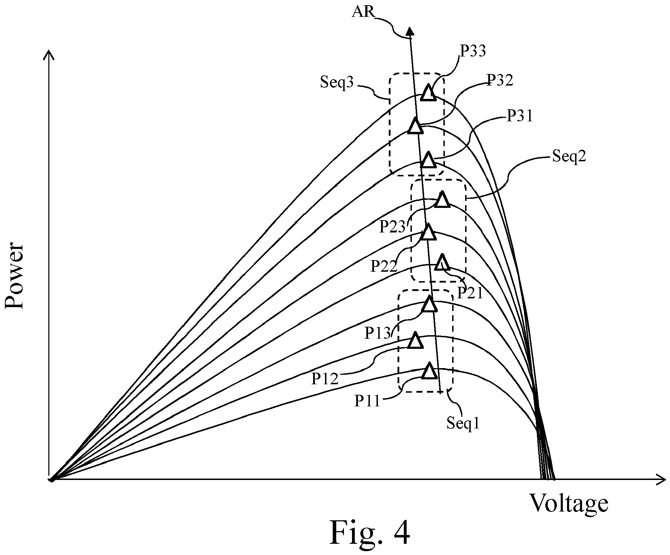

**Fig.** 4 shows plural curves representing the power variations versus voltage of the photovoltaic cells or arrays of cells at different climatic conditions and power measurement points taken according to the first mode of realization of the present invention.

On the horizontal axis of Fig. 4, voltage values are shown. The voltage values are comprised between null value and the open circuit voltage $V_{OC}$.

On the vertical axis of Fig. 4, power values are shown. The power values are comprised between null value and the maximum power point value.

Plural curves are shown in Fig. 4, they correspond to different weather conditions and evolve in time.

When the algorithm of Fig. 3 starts, the power value set to first power value $P_1$ at step S302 corresponds to point noted P11 in Fig. 4, the power value set to second power value $P_2$ at step S306 corresponds to point noted P12 and the power value set to third power value $P_3$ at

step S309 corresponds to point noted P13.

At step S312, it is determined that the difference $\Delta P = P_B$ of $P_A$ is negative. The fourth power value $P_A$ is the estimated power that would have been delivered by the voltage source at first voltage $V_A$ at the time of measuring the second power value $P_B$ at second voltage value $V_B$. To go into the direction of higher power as estimated at second time instant, the variable $V_A$ is set to $V_A$ +dV and the variable $V_B$ is set to $V_B$ +dV.

The three points P11, P12 and P 13 form a sequence noted Seq1 and enable the determination of the new voltage $V_{pvref}$ that the power source PV has to provide in order to be as much as possible close to the maximum power point.

As the algorithm of Fig. 3 is executed continuously, a new set of points P21, P22 and P23 noted Seq2 is taken.

The power value set to $P_1$ at step S302 corresponds to point noted P21 in Fig. 4, the power value set to $P_2$ at step S306 corresponds to point noted P22 and the power value set to $P_3$ at step S309 corresponds to point noted P23.

At step S312, it is determined that the difference $\Delta P = P_B$ of $P_A$ is positive. The variable $V_A$ is set to $V_A$ -dV and the variable $V_B$ is set to $V_B$ -dV.

Another new set of points P31, P32 and P33 noted Seq3 is taken.

The power value set to $P_1$ at step S302 corresponds to point noted P31 in Fig. 4, the power value set to $P_2$ at step S306 corresponds to point noted P32 and the power value set to $P_3$ at step S309 corresponds to point noted P33.

As shown in Fig. 4, the algorithm of Fig. 3 follows the maximum power point variations which are indicated by the arrow noted AR

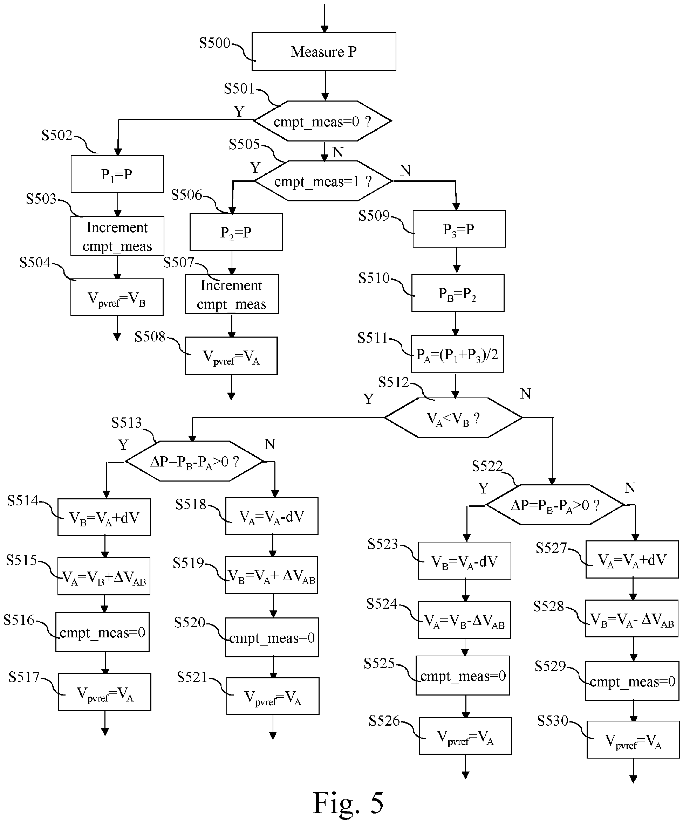

**Fig.** 5 is an example of an algorithm for tracking the maximum power point of the power source according to a second mode of realization of the present invention.

More precisely, the processor 200 executes the present algorithm periodically by step of a predetermined time period, for example every second.

At first execution of present algorithm, the processor 200 reads in memory 203 a predetermined value $\Delta V_{AB}$ and determines initial values of variables $V_A$ and $V_B$ from the predetermined value. As example, $\Delta V_{AB}$ is equal to one volt.

In a first variant, the initial value of $V_B$ is equal to the null value and the initial value of $V_A$ is equal to the predetermined value $\Delta V_{AB}$.

In a second variant, the processor 200 commands the energy conversion device Conv in order to measure the open circuit voltage $V_{OC}$. The initial value of $V_A$ is equal to the value of Voc and the initial value of $V_B$ is equal to the difference between $V_A$ and the predetermined value $\Delta V_{AB}$. The processor 200 then controls the voltage provided by the power source PV to a first value $V_{pvref}$ which is equal to a value $V_A$.

At step S500, the processor 200 commands the analogue to digital converter ADC 206 in order to proceed to a measurement of the voltage $V_{in}$ and the current $I_{in}$.

From the voltage $V_{in}$ and the current $I_{in}$ values, the processor 200 determines a power value P provided by the power source PV.

At next step S501, the processor 200 checks if the variable cmpt_meas is equal to null value.

If the variable cmpt_meas is equal to null value, the processor 200 moves to step S502. Otherwise, the processor 200 moves to step S505.

At step S502, the processor 200 sets the variable $P_1$ to the value of P measured at step S500.

At next step S503, the processor 200 increments the value of variable cmpt_meas by one.

At next step S504, the processor 200 controls the voltage provided by the power source PV to a second value $V_{pvref}$ which is equal to a value $V_B$. The voltage value $V_B$ is memorized in the RAM memory 203. The processor 200 transfers, through interface module 205, the duty cycle D to be applied by the energy conversion device Conv in order to obtain $V_{in} = V_{pvref}$.

After that, the processor 200 interrupts the present algorithm and returns to step S500.

At step S505, the processor 200 checks if the variable cmpt_meas is equal to the value one.

If the variable cmpt_meas is equal to the value one, the processor 200 moves to step S506. Otherwise, the processor 200 moves to step S509.

At step S506, the processor 200 sets the variable $P_2$ to the value of P determined at step S500.

At next step S507, the processor 200 increments the value of variable cmpt_meas by one.

At next step S508, the processor 200 controls the voltage provided by the power source PV to a third value $V_{pvref}$ which is equal to a value $V_A$. The voltage value $V_A$ is memorized in the RAM memory 203. The processor 200 transfers, through interface module 205, the duty cycle D to be applied by the energy conversion device Conv in order to obtain $V_{in} = V_{pvref}$.

After that, the processor 200 interrupts the present algorithm and returns to step S500.

At step S509, the processor 200 sets the variable $P_3$ to the value of P determined at step S500.

At next step S510, the processor 200 sets the variable $P_B$ to the value of $P_2$.

At next step S511, the processor 200 determines a mean value $P_A$ of $P_1$ and $P_3$.

$$P_A = (P_1 + P_3)/2$$

At next step S512, the processor 200 checks if the variable $V_A$ value is lower than the variable $V_B$ value.

If the variable $V_A$ value is lower than the variable $V_B$ value, the processor 200 moves to step S513. Otherwise, the processor 200 moves to step S522.

At next step S513, the processor 200 checks if the difference ΔP= P$_B$ - P$_A$ is positive.

If the difference ΔP= P$_B$ - P$_A$ is positive, the processor 200 moves to step S514. Otherwise, the processor 200 moves to step S518.

At step S514, the processor 200 sets the variable V$_B$ to V$_A$ +dV.

For example dV is equal to one volt.

For example dV is proportional to the difference between the second and fourth power values.

At step S515, the processor 200 sets the variable V$_A$ to V$_B$ +ΔV$_{AB}$.

For example AV$_{AB}$ is equal to one Volt.

At steps S514 and S515, the second voltage value V$_B$ is changed from being upper than the first voltage value V$_A$ to being lower than the first voltage value V$_A$ if the difference between the second power value P$_B$ and the fourth power value P$_A$ is positive.

At next step S516, the processor 200 sets the value of variable cmpt_meas to null value.

At next step S517, the processor 200 controls the voltage provided by the power source PV to a third value V$_{pvref}$ which is equal to a value V$_A$. The voltage value V$_A$ is memorized in the RAM memory 203. The processor 200 transfers, through interface module 205, the duty cycle D to be applied by the energy conversion device Conv in order to obtain V$_{in}$ = V$_{pvref}$.

After that, the processor 200 interrupts the present algorithm and returns to step S500.

At step S518, the processor 200 sets the variable V$_A$ to V$_A$ -dV.

At step S519, the processor 200 sets the variable V$_B$ to V$_A$ +ΔV$_{AB}$.

At steps S518 and S519, the second voltage value V$_B$ is maintained upper than the first voltage value V$_A$.

ΔV$_{AB}$ is the difference between V$_A$ and V$_B$. For example ΔV$_{AB}$ is equal to one Volt.

For example dV is equal to one volt.

For example dV is proportional to the difference between the second and fourth power values.

At next step S520, the processor 200 sets the value of variable cmpt_meas to null value.

At next step S521, the processor 200 controls the voltage provided by the power source PV to a third value V$_{pvref}$ which is equal to a value V$_A$. The voltage value V$_A$ is memorized in the RAM memory 203. The processor 200 transfers, through interface module 205, the duty cycle D to be applied by the energy conversion device Conv in order to obtain V$_{in}$ = V$_{pvref}$.

After that, the processor 200 interrupts the present algorithm and returns to step S500.

At next step S522, the processor 200 checks if the difference ΔP= P$_B$ - P$_A$ is positive.

If the difference ΔP= P$_B$ - P$_A$ is positive, the processor 200 moves to step S523. Otherwise, the processor 200 moves to step S527.

At step S523, the processor 200 sets the variable V$_B$ to V$_A$ -dV.

At step S524, the processor 200 sets the variable V$_A$ to V$_B$ -ΔV$_{AB}$.

For example dV is equal to one volt.

For example dV is proportional to the difference between the second and fourth power values.

At steps S523 and S524, the second voltage value V$_B$ is changed from being lower than the first voltage value V$_A$ to being upper than the first voltage value V$_A$ if the difference between the second power value P$_B$ and the fourth power value is positive P$_A$.

At next step S525, the processor 200 sets the value of variable cmpt_meas to null value.

At next step S526, the processor 200 controls the voltage provided by the power source PV to a third value V$_{pvref}$ which is equal to a value V$_A$. The voltage value V$_A$ is memorized in the RAM memory 203. The processor 200 transfers, through interface module 205, the duty cycle D to be applied by the energy conversion device Conv in order to obtain V$_{in}$ = V$_{pvref}$.

After that, the processor 200 interrupts the present algorithm and returns to step S500.

At step S527, the processor 200 sets the variable V$_A$ to V$_A$ +dV.

At step S528, the processor 200 sets the variable V$_B$ to V$_A$ -ΔV$_{AB}$.

For example dV is equal to one volt.

For example dV is proportional to the difference between the second and fourth power values.

At steps S527 and S528, the second voltage value V$_B$ is maintained lower than the first voltage value V$_A$.

At next step S529, the processor 200 sets the value of variable cmpt_meas to null value.

At next step S530, the processor 200 controls the voltage provided by the power source PV to a third value V$_{pvref}$ which is equal to a value V$_A$. The voltage value V$_A$ is memorized in the RAM memory 203. The processor 200 transfers, through interface module 205, the duty cycle D to be applied by the energy conversion device Conv in order to obtain V$_{in}$ = V$_{pvref}$.

After that, the processor 200 interrupts the present algorithm and returns to step S500.

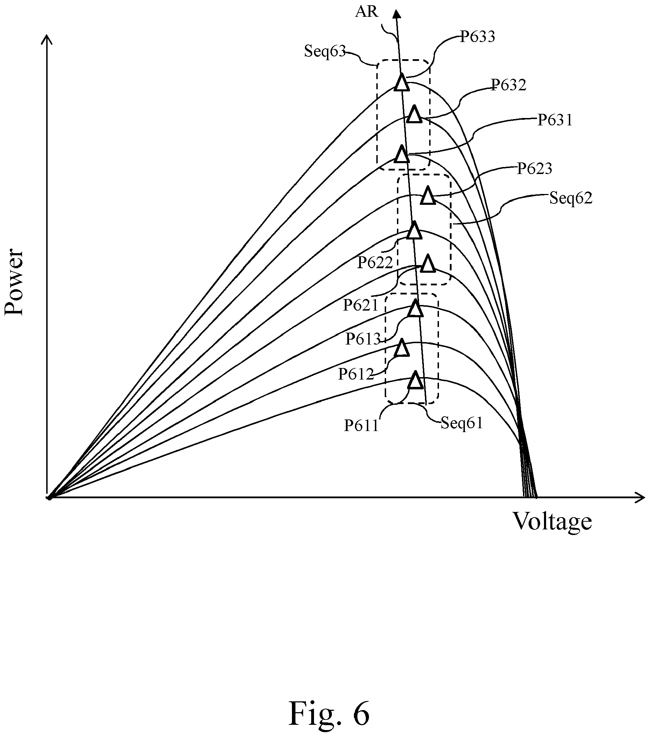

**Fig.** 6 shows plural curves representing the power variations versus voltage of the photovoltaic cells or arrays of cells at different climatic conditions and power measurement points taken according to the second mode of realization of the present invention.

On the horizontal axis of Fig. 6, voltage values are shown. The voltage values are comprised between null value and the open circuit voltage V$_{OC}$.

On the vertical axis of Fig. 6, power values are shown. The power values are comprised between null value and the maximum power point value.

Plural curves are shown in Fig. 6, they correspond to different weather conditions and evolve in time.

When the algorithm of Fig. 5 starts, the power value set to P$_1$ at step S502 corresponds to point noted P611 in Fig. 6, the power value set to P$_2$ at step S506

corresponds to point noted P612 and the power value set to $P_3$ at step S509 corresponds to point noted P613.

At step S512, it is determined that $V_A > V_B$ and at step S522 that the difference $\Delta P = P_B$ of $P_A$ is negative. At step S527, the variable $V_A$ is set to $V_A + dV$ and at step S528 the variable $V_B$ is set to $V_A - \Delta V_{AB}$.

The three points P611, P612 and P613 form a sequence noted Seq61 and enable the determination of the new voltage $V_{pvref}$ that the power source PV has to provide in order to be as much as possible close to the maximum power point.

As the algorithm of Fig. 5 is executed periodically, a new set of points noted Seq62 is taken.

The power value set to $P_1$ at step S502 corresponds to point noted P621 in Fig. 6, the power value set to $P_2$ at step S506 corresponds to point noted P622 and the power value set to $P_3$ at step S509 corresponds to point noted P623.

It has to be noted here that the second voltage value $V_B$ is lower than the first voltage $V_A$.

At step S512, it is determined that $V_A > V_B$ and at step S522 that the difference $\Delta P = P_B$ of $P_A$ is positive. At step S523, the variable $V_B$ is set to $V_A - dV$ and at step S524 the variable $V_A$ is set to $V_B - \Delta V_{AB}$.

According to the second mode of realization, the second voltage value $V_B$ is set upper than the first voltage $V_A$.

Another new set of points noted Seq63 is taken.

The power value set to $P_1$ at step S502 corresponds to point noted P631 in Fig. 6, the power value set to $P_2$ at step S506 corresponds to point noted P632 and the power value set to $P_3$ at step S509 corresponds to point noted P633.

As shown in Fig. 6, the algorithm of Fig. 6 follows the maximum power point variations which are indicated by the arrow noted AR

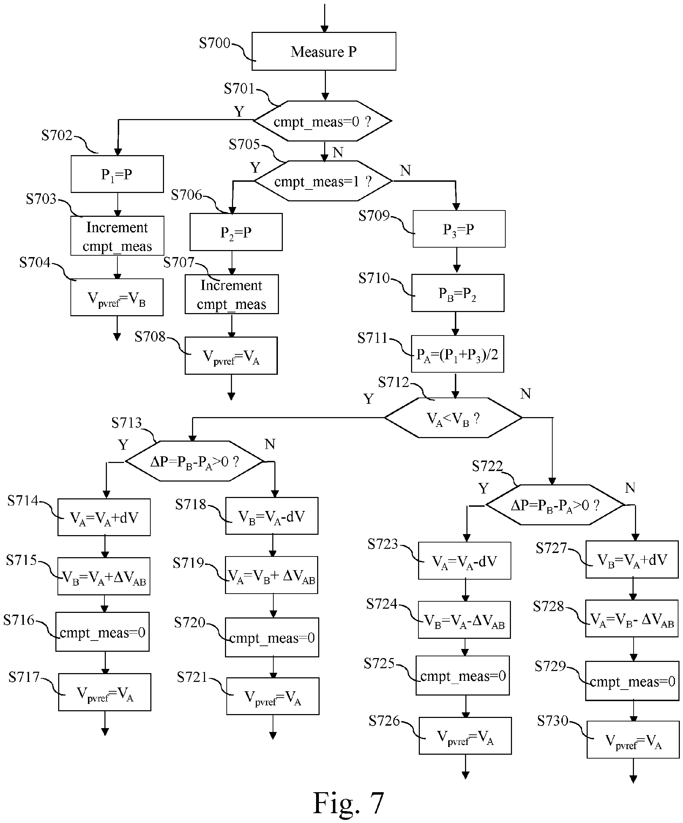

**Fig. 7** is an example of an algorithm for tracking the maximum power point of the power source according to a third mode of realization of the present invention.

More precisely, the processor 200 executes the present algorithm periodically by step of a predetermined time period, for example every second.

At first execution of present algorithm, the processor 200 reads in memory 203 a predetermined value $\Delta V_{AB}$ and determines initial values of variables $V_A$ and $V_B$ from the predetermined value. As example, $\Delta V_{AB}$ is equal to one volt.

In a first variant, initial value of $V_A$ is equal to the null value and initial value of $V_B$ is equal to the predetermined value $\Delta V_{AB}$.

In a second variant, the processor 200 commands the energy conversion device Conv in order to measure the open circuit voltage $V_{OC}$. The initial value of $V_B$ is equal to the value of Voc and the initial value of $V_A$ is equal to the difference between $V_B$ and the predetermined value $\Delta V_{AB}$.

The processor 200 then controls the voltage provided by the power source PV to a first value $V_{pvref}$ which is equal to a value $V_A$.

At step S700, the processor 200 commands the analogue to digital converter 206 in order to proceed to a measurement of the voltage $V_{in}$ and the current $I_{in}$.

From the voltage $V_{in}$ and the current $I_{in}$ values, the processor 200 determines a power value P provided by the power source PV.

At next step S701, the processor 200 checks if the variable cmpt_meas is equal to null value.

If the variable cmpt_meas is equal to null value, the processor 200 moves to step S702. Otherwise, the processor 200 moves to step S705.

At step S702, the processor 200 sets the variable $P_1$ to the value of P measured at step S700.

At next step S703, the processor 200 increments the value of variable cmpt_meas by one.

At next step S704, the processor 200 controls the voltage provided by the power source PV to a second value $V_{pvref}$ which is equal to a value $V_B$. The voltage value $V_B$ is memorized in the RAM memory 203. The processor 200 transfers, through interface module 205, the duty cycle D to be applied by the energy conversion device Conv in order to obtain $V_{in} = V_{pvref}$.

After that, the processor 200 interrupts the present algorithm and returns to step S700.

At step S705, the processor 200 checks if the variable cmpt_meas is equal to the value one.

If the variable cmpt_meas is equal to the value one, the processor 200 moves to step S706. Otherwise, the processor 200 moves to step S709.

At step S706, the processor 200 sets the variable $P_2$ to the value of P determined at step S700.

At next step S707, the processor 200 increments the value of variable cmpt_meas by one.

At next step S708, the processor 200 controls the voltage provided by the power source PV to a third value $V_{pvref}$ which is equal to a value $V_A$. The voltage value $V_A$ is memorized in the RAM memory 203. The processor 200 transfers, through interface module 205, the duty cycle D to be applied by the energy conversion device Conv in order to obtain $V_{in} = V_{pvref}$.

After that, the processor 200 interrupts the present algorithm and returns to step S700.

At step S709, the processor 200 sets the variable $P_3$ to the value of P measured at step S700.

At next step S710, the processor 200 sets the variable $P_B$ to the value of $P_2$.

At next step S711, the processor 200 determines a mean value $P_A$ of $P_3$ and $P_1$.

$$P_A = (P_1 + P_3)/2$$

At next step S712, the processor 200 checks if the variable $V_A$ value is lower than the variable $V_B$ value.

If the variable $V_A$ value is lower than the variable $V_B$ value, the processor 200 moves to step S713. Otherwise, the processor 200 moves to step S722.

At next step S713, the processor 200 checks if the difference $\Delta P = P_B - P_A$ is positive.

If the difference $\Delta P = P_B - P_A$ is positive, the processor 200 moves to step S714. Otherwise, the processor 200 moves to step S718.

At step S714, the processor 200 sets the variable $V_A$ to $V_A$ +dV.

For example dV is equal to one Volt.

At step S715, the processor 200 sets the variable $V_B$ to $V_A$ +$\Delta V_{AB}$.

For example dV is equal to one volt.

For example dV is proportional to the difference between the second and fourth power values.

At steps S714 and S715, the second voltage value $V_B$ is maintained upper than the first voltage value $V_A$.

At next step S716, the processor 200 sets the value of variable cmpt_meas to null value.

At next step S717, the processor 200 controls the voltage provided by the power source PV to a third value $V_{pvref}$ which is equal to a value $V_A$. The voltage value $V_A$ is memorized in the RAM memory 203. The processor 200 transfers, through interface module 205, the duty cycle D to be applied by the energy conversion device Conv in order to obtain $V_{in} = V_{pvref}$.

After that, the processor 200 interrupts the present algorithm and returns to step S700.

At step S718, the processor 200 sets the variable $V_B$ to $V_A$ -dV.

At step S519, the processor 200 sets the variable $V_A$ to $V_B$ +$\Delta V_{AB}$.

$\Delta V_{AB}$ is the difference between $V_A$ and $V_B$. For example $\Delta V_{AB}$ is equal to one Volt.

For example dV is equal to one volt.

For example dV is proportional to the difference between the second and fourth power values.

At steps S718 and S719, the second voltage value is changed from being upper than the first voltage value to being lower than the first voltage value if the difference between the second power value and the fourth power value is negative.

At next step S720, the processor 200 sets the value of variable cmpt_meas to null value.

At next step S721, the processor 200 controls the voltage provided by the power source PV to a third value $V_{pvref}$ which is equal to a value $V_A$. The voltage value $V_A$ is memorized in the RAM memory 203. The processor 200 transfers, through interface module 205, the duty cycle D to be applied by the energy conversion device Conv in order to obtain $V_{in} = V_{pvref}$.

After that, the processor 200 interrupts the present algorithm and returns to step S700.

At next step S722, the processor 200 checks if the difference $\Delta P = P_B - P_A$ is positive.

If the difference $\Delta P = P_B - P_A$ is positive, the processor 200 moves to step S723. Otherwise, the processor 200 moves to step S727.

At step S723, the processor 200 sets the variable $V_A$ to $V_A$ -dV.

For example dV is equal to one volt.

For example dV is proportional to the difference between the second and fourth power values.

At steps S723 and S724, the second voltage value $V_B$ is maintained lower than the first voltage value $V_A$.

At step S724, the processor 200 sets the variable $V_B$ to $V_A$ -$\Delta V_{AB}$.

At next step S725, the processor 200 sets the value of variable cmpt_meas to null value.

At next step S726, the processor 200 controls the voltage provided by the power source PV to a third value $V_{pvref}$ which is equal to a value $V_A$. The voltage value $V_A$ is memorized in the RAM memory 203. The processor 200 transfers, through interface module 205, the duty cycle D to be applied by the energy conversion device Conv in order to obtain $V_{in} = V_{pvref}$.

After that, the processor 200 interrupts the present algorithm and returns to step S700.

At step S727, the processor 200 sets the variable $V_B$ to $V_A$ +dV.

For example dV is equal to one volt.

For example dV is proportional to the difference between the second and fourth power values.

At step S728, the processor 200 sets the variable $V_A$ to $V_A$ -$\Delta V_{AB}$.

At steps S727 and S728, the second voltage value is changed from being lower than the first voltage value to being upper than the first voltage value if the difference between the second power value and the fourth power value is negative.

At next step S729, the processor 200 sets the value of variable cmpt_meas to null value.

At next step S730, the processor 200 controls the voltage provided by the power source PV to a third value $V_{pvref}$ which is equal to a value $V_A$. The voltage value $V_A$ is memorized in the RAM memory 203. The processor 200 transfers, through interface module 205, the duty cycle D to be applied by the energy conversion device Conv in order to obtain $V_{in} = V_{pvref}$.

After that, the processor 200 interrupts the present algorithm and returns to step S700.

Naturally, many modifications can be made to the embodiments of the invention described above without departing from the scope of the present invention.

**Claims**

1. Device for tracking the maximum power point of a power source, the device comprising:

   - means for controlling the voltage provided by the power source to a first voltage value at a first time instant,
- means for measuring a first electric power value generated by the power source at the first time instant,
- means for controlling the voltage provided by the power source at a second time instant to a second voltage value different from the first voltage value,
- means for measuring a second electric power value generated by the power source at the second time instant,
- means for controlling the voltage provided by the power source at a third time instant to the first voltage value,
- means for measuring a third electric power value generated by the power source at the third time instant,
- means for determining a fourth power value from the first and the third power value,
- means for modifying the first and second voltage values according to the comparison of the second and fourth power values.

2. Device according to claim 1, **characterised in that** the device further comprises means for setting the second voltage value upper than or lower than the first voltage value according to the comparison of the second and fourth power values.

3. Device according to claim 2, **characterised in that** the second voltage value is changed from being lower than the first voltage value to being upper than the first voltage value or the second voltage value is changed from being upper than the first voltage value to being lower than the first voltage value if the difference between the second power value and the fourth power value is positive.

4. Device according to claim 2, **characterised in that** the second voltage value is changed from being lower than the first voltage value to being upper than the first voltage value or the second voltage value is changed from being upper than the first voltage value to being lower than the first voltage value if the difference between the second power value and the fourth power value is negative.

5. Device according to claim 1, **characterised in that** the difference between the second and first time instants is equal to the difference between the third and second time instants and the fourth power value is the average of the first and third power values.

6. Device according to any of the claims 1 to 5, **characterised in that** the means for modifying first and second voltage values further comprise:

   - means for determining a voltage step from the comparison of the second and fourth power values,
- means for modifying the first and second voltage values by adding or subtracting the voltage step to the first and second voltage values according to the difference between the second and fourth power values and to the difference of the first and second voltage values.

7. Device according to claim 6, **characterised in that** the voltage step is the difference between the second and first voltage values.

8. Device according to claim 6, **characterised in that** the voltage step is proportional to the difference between the second and fourth power values.

9. Device according to any of the claims 1 to 8, **characterised in that** the electric power values are measured on voltages and currents at the output of the power source.

10. Device according to any of the claims 1 to 9, **characterised in that** the device for tracking the maximum power point is included in an energy conversion device.

11. Method for tracking the maximum power point of a power source, the method comprising the steps of:

   - controlling the voltage provided by the power source to a first voltage value at a first time instant,
   - measuring a first electric power value generated by the power source at the first time instant,
   - controlling the voltage provided by the power source at a second time instant to a second voltage value different from the first voltage value,
   - measuring a second electric power value generated by the power source at the second time instant,
   - controlling the voltage provided by the power source at a third time instant to the first voltage value,
   - measuring a third electric power value generated by the power source at the third time instant,
   - determining a fourth power value from the first and the third power value,
   - modifying the first and second voltage values according to the comparison of the second and fourth power values.

Fig. 1

Fig. 2

S300 — Measure P

S301 — cmpt_meas=0 ? — Y

S302 — $P_1=P$

S303 — Increment cmpt_meas

S304 — $V_{pvref}=V_B$

N

S305 — cmpt_meas=1 ? — Y ... N

S306 — $P_2=P$

S307 — Increment cmpt_meas

S308 — $V_{pvref}=V_A$

S309 — $P_3=P$

S310 — $P_B=P_2$

S311 — $P_A=(P_1+P_3)/2$

S312 — $\Delta P=P_B-P_A>0$ ? — N ... Y

S313 — $V_A=V_A+dV$

S314 — $V_B=V_B+dV$

S315 — Cmpt_meas=0

S316 — $V_{pvref}=V_A$

S317 — $V_A=V_A-dV$

S318 — $V_B=V_B-dV$

S319 — cmpt_meas=0

S320 — $V_{pvref}=V_A$

Fig. 3

Fig. 4

S500 — Measure P

S501 — cmpt_meas=0 ?

Y →

S502 — $P_1=P$

S503 — Increment cmpt_meas

S504 — $V_{pvref}=V_B$

N ↓

S505 — cmpt_meas=1 ?

Y →

S506 — $P_2=P$

S507 — Increment cmpt_meas

S508 — $V_{pvref}=V_A$

N →

S509 — $P_3=P$

S510 — $P_B=P_2$

S511 — $P_A=(P_1+P_3)/2$

S512 — $V_A<V_B$ ?

Y →

S513 — $\Delta P=P_B-P_A>0$ ?

Y ↓

S514 — $V_B=V_A+dV$

S515 — $V_A=V_B+\Delta V_{AB}$

S516 — cmpt_meas=0

S517 — $V_{pvref}=V_A$

N ↓

S518 — $V_A=V_A-dV$

S519 — $V_B=V_A+\Delta V_{AB}$

S520 — cmpt_meas=0

S521 — $V_{pvref}=V_A$

N →

S522 — $\Delta P=P_B-P_A>0$ ?

Y ↓

S523 — $V_B=V_A-dV$

S524 — $V_A=V_B-\Delta V_{AB}$

S525 — cmpt_meas=0

S526 — $V_{pvref}=V_A$

N ↓

S527 — $V_A=V_A+dV$

S528 — $V_B=V_A-\Delta V_{AB}$

S529 — cmpt_meas=0

S530 — $V_{pvref}=V_A$

Fig. 5

Fig. 6

S700 — Measure P

S701 — cmpt_meas=0 ?

Y

S702 — $P_1=P$

S703 — Increment cmpt_meas

S704 — $V_{pvref}=V_B$

N

S705 — cmpt_meas=1 ?

Y

S706 — $P_2=P$

S707 — Increment cmpt_meas

S708 — $V_{pvref}=V_A$

N

S709 — $P_3=P$

S710 — $P_B=P_2$

S711 — $P_A=(P_1+P_3)/2$

S712 — $V_A<V_B$ ?

Y

S713 — $\Delta P=P_B-P_A>0$ ?

Y

S714 — $V_A=V_A+dV$

S715 — $V_B=V_A+\Delta V_{AB}$

S716 — cmpt_meas=0

S717 — $V_{pvref}=V_A$

N

S718 — $V_B=V_A-dV$

S719 — $V_A=V_B+\Delta V_{AB}$

S720 — cmpt_meas=0

S721 — $V_{pvref}=V_A$

N

S722 — $\Delta P=P_B-P_A>0$ ?

Y

S723 — $V_A=V_A-dV$

S724 — $V_B=V_A-\Delta V_{AB}$

S725 — cmpt_meas=0

S726 — $V_{pvref}=V_A$

N

S727 — $V_B=V_A+dV$

S728 — $V_A=V_B-\Delta V_{AB}$

S729 — cmpt_meas=0

S730 — $V_{pvref}=V_A$

Fig. 7

**EUROPEAN SEARCH REPORT**

Application Number

EP 12 15 2566

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SALAS V ET AL: "Review of the maximum power point tracking algorithms for stand-alone photovoltaic systems", SOLAR ENERGY MATERIALS AND SOLAR CELLS, ELSEVIER SCIENCE PUBLISHERS, AMSTERDAM, NL, vol. 90, no. 11, 6 July 2006 (2006-07-06), pages 1555-1578, XP028002144, ISSN: 0927-0248, DOI: 10.1016/J.SOLMAT.2005.10.023 [retrieved on 2006-07-06] * the whole document * | 1-11 | INV. G05F1/67 |
| X | ESRAM T ET AL: "Comparison of Photovoltaic Array Maximum Power Point Tracking Techniques", IEEE TRANSACTIONS ON ENERGY CONVERSION, IEEE SERVICE CENTER, PISCATAWAY, NJ, US, vol. 22, no. 2, 1 June 2007 (2007-06-01), pages 439-449, XP011184738, ISSN: 0885-8969, DOI: 10.1109/TEC.2006.874230 * the whole document * | 1-11 | |
| X | EP 1 457 857 A2 (OMRON TATEISI ELECTRONICS CO [JP]) 15 September 2004 (2004-09-15) * the whole document * | 1-11 | **TECHNICAL FIELDS SEARCHED (IPC)** G05F |
| A | EP 2 333 635 A1 (MITSUBISHI ELEC R&D CT EUROPE [NL]; MITSUBISHI ELECTRIC CORP [JP]) 15 June 2011 (2011-06-15) * the whole document * | 1-11 | |

The present search report has been drawn up for all claims

| Place of search | Date of completion of the search | Examiner |
|---|---|---|
| The Hague | 28 September 2012 | Schobert, Daniel |

**ANNEX TO THE EUROPEAN SEARCH REPORT
ON EUROPEAN PATENT APPLICATION NO.**

EP 12 15 2566

This annex lists the patent family members relating to the patent documents cited in the above-mentioned European search report.
The members are as contained in the European Patent Office EDP file on
The European Patent Office is in no way liable for these particulars which are merely given for the purpose of information.

28-09-2012

| Patent document cited in search report | | Publication date | Patent family member(s) | | Publication date |
|---|---|---|---|---|---|
| EP 1457857 | A2 | 15-09-2004 | CN | 1538262 A | 20-10-2004 |
| | | | DE | 602004011280 T2 | 15-01-2009 |
| | | | EP | 1457857 A2 | 15-09-2004 |
| | | | JP | 3548765 B1 | 28-07-2004 |
| | | | JP | 2004272803 A | 30-09-2004 |
| | | | KR | 20040080956 A | 20-09-2004 |
| | | | US | 2004245967 A1 | 09-12-2004 |
| EP 2333635 | A1 | 15-06-2011 | EP | 2333635 A1 | 15-06-2011 |
| | | | EP | 2513736 A1 | 24-10-2012 |
| | | | US | 2012235665 A1 | 20-09-2012 |
| | | | WO | 2011073070 A1 | 23-06-2011 |

EPO FORM P0459

For more details about this annex : see Official Journal of the European Patent Office, No. 12/82